# EUROPEAN PATENT APPLICATION

(11) **EP 2 174 540 A1**
(43) Date of publication of application: **14.04.2010**
(21) Application number: 09252381.0
(22) Date of filing: 08.10.2009
(51) Int. Cl.: A01K 1/035, A01K 27/00, A01N 25/02, A01N 25/08, A01N 25/34, A01N 65/00, A01P 17/00, A01N 31/02, A01N 37/18, A01N 37/44

(54) **Process**

(30) Priority: 08.10.2008 GB 0818461
(71) Applicant: Bob Martin (UK) Ltd., Yatton Somerset BS49 4BS (GB)
(72) Inventor: Spurlock, Mark, Frome, Somerset, BA11 2JJ (GB)
(74) Representative: Jacob, Reuben Ellis

(57) **Abstract**

A process for making parasite repellent absorbent material, comprising:
a). dosing an absorbent material with a solution or suspension, said solution or suspension comprising at least one primary solvent and at least one parasite repellent to achieve a desired loading of the at least one parasite repellent ;
b). drying the dosed absorbent material so that the at least one primary solvent evaporates; and
c). storing the dried absorbent material away from direct sunlight for at least 12 hours to form parasite repellent absorbent material.

The solution or suspension sprayed onto the absorbent material may additionally comprise at least one secondary solvent that is less volatile than the at least one primary solvent.

The parasite repellent absorbent material produced by this process may be used to make a parasite repellent product, such as a parasite repellent collar or a parasite repellent bed liner.

## Description

This invention relates to a process for making parasite repellent absorbent material, more particularly parasite repellent absorbent material that may be used in a parasite repellent collar that may be worn by an animal, e.g. a pet.

Many animals have parasites with adult stages that live on the surface of their bodies, e.g. lice, fleas and ticks; these parasites bite the animal's skin and ingest its blood, often injecting foreign proteins with anticoagulant properties. This can irritate the animal, initiate allergic responses and may cause infections as well. Additionally the parasites can have a negative effect on any people the animal comes into contact with, or environments that the animal frequents. This issue is of greater significance when the animal is domesticated, e.g. a pet cat or dog, and lives in close contact with its owner. This is especially true if the domesticated animal lives in a heated environment, which enables parasites such as fleas to pose a potential problem all year round. Consequently, most pet owners treat their pets in some way to repel or eradicate the parasites. Such treatments include sprays, powders, injections and collars.

Most anti-parasitic or parasite repellent collars are made from plastic with the anti-parasitic compound or parasite repellent being released slowly over time. This confers residual efficacy as well as reducing the potential for toxicity in the animal wearing the collar. Such collars are usually made by mixing the anti-parasitic compound/parasite repellent with molten plastic then extruding the mixture to form a plastic anti-parasitic or parasite repellent collar.

The present invention offers a method of making parasite repellent absorbent material, which material may be used to make parasite repellent products, including parasite repellent collars and parasite repellent pet bed liners.

In accordance with a first aspect of the present invention, there is provided a process for making parasite repellent absorbent material, said process comprising:
a). dosing an absorbent material with a solution or suspension, said solution or suspension comprising at least one primary solvent and at least one parasite repellent to achieve a desired loading of the at least one parasite repellent;
b). drying the dosed absorbent material so that the at least one primary solvent evaporates; and
c). storing the dried absorbent material away from direct sunlight for at least 12 hours to form parasite repellent absorbent material.

Any means of achieving an even loading of the solution or suspension (and thereby an even loading of the at least one parasite repellent) throughout the absorbent material is suitable for dosing the absorbent material. More specifically, dosing may take the form of spraying the absorbent material with the solution or suspension, soaking the absorbent material in the solution or suspension, or immersing the absorbent material in the suspension or solution.

The at least one primary solvent enables the absorbent material to be dosed with the at least one parasite repellent. Suitable primary solvents include aqueous solvents, such as water and non-aqueous solvents such as those selected from the list consisting of acetone, ethanol, isopropanol, ethyl acetate, and any combination thereof. A mix of aqueous and non-aqueous solvents may also be used.

The solution or suspension sprayed onto the absorbent material may comprise at least one secondary solvent in addition to the at least one primary solvent and at least one parasite repellent. The majority of the at least one secondary solvent will not evaporate during step b) since the at least one secondary solvent is less volatile than the at least one primary solvent. The purpose of the at least one secondary solvent is to enable the release of the at least one parasite repellent from the absorbent material during use. That is, the at least one parasite repellent is slowly released from the absorbent material when in contact with a domesticated animal, thereby repelling parasites from the domesticated animal. Suitable secondary solvents include glycol ethers, such as carbitol, and silicones, such as low viscosity polydimethyl siloxanes.

Suitable parasite repellents include those selected from the list consisting of margosa extract, ethyl butylacetylaminopropionate, diethyl toluamide (DEET), tea tree oil, coconut oil triglycerides, geraniol, and any combination thereof. Optionally, the at least one parasite repellent may be partially or wholly microencapsulated to aid a slow release rate from the parasite repellent absorbent material formed by the claimed process and enhance residual efficacy.

Margosa extract (derived from the neem tree seed, *Azadirachta indica*) is a natural product that has parasite repellent properties; the extract typically takes the form of an oil. The primary active substances within margosa extract are limonoids, such as azadirachtin, nimbin, meliantriol and salannin. Since margosa extract is a natural product the proportions of the limonoids within any particular sample can vary, the proportions of the limonoids are also affected by the process used to extract the active substances from the seeds. Therefore, in the context of the present application, the phrase "margosa extract" covers any product derived from the seeds of the neem tree which comprises one or more limonoids, specifically one or more of azadirachtin, nimbin, meliantriol and salannin, and combination thereof. However, because of the wide availability of neem seed extracts, the use of a standardised extract is typically preferred. Use of a standardised extract with standardised limonoid concentration ranges helps ensure the efficacy of the parasite repellent absorbent material produced by the claimed process.

Margosa extract is known to irritate the mouthparts of biting insects and disrupt the growth and reproduction of such parasites. For example, margosa extract is known to repel fleas, and to retard their growth, cause their eggs to fail to hatch, cause their larvae to fail to develop and to inhibit their feeding. One benefit of margosa extract is that it is of low mammalian toxicity and can be used with pregnant or nursing animals.

Typically a domesticated animal finds it hard to groom its neck area, and so placing a parasite repellent collar around an animal's neck helps target parasites in an area that may not be covered by normal grooming. Any collar made using the parasite repellent absorbent material of the present invention will shed some of the at least one parasite repellent locally onto the animal's neck and some of the at least one parasite repellent will migrate on the animal's skin.

One advantage of margosa extract is that it is fat soluble, and therefore the lipids present on an animal's skin help distribute margosa extract across the body of the animal from the neck, across its head and to the tip of its tail.

It is significant to note that a parasite repellent is not the same as a pesticide or insecticide. In fact the European Biocidal Products Directive classifies them in separate categories:
- Product Type 18 - insecticides, acaricides and to control other arthropods; and
- Product Type 19 - repellents or attractants.

Nonetheless, some products may fall into both categories, depending on the concentration of the active ingredient in the product. For example, with reference to the list of participants/applicants to the review programme of existing active substances used in biocidal products (http://ec.europa.eu/environment/biocides/pdf/list_participants_applicants_subs.pdf) it is clear that geraniol can fall into both categories. The US Environmental Protection Agency also differentiates between "biopesticides" that include naturally occurring substances that can repel pests (such as neem oil, i.e. margosa extract) and "chemical pesticides" that include organophosphate pesticides (such as Diazinon), carbamate pesticides (such as Propoxur), organochlorine insecticides (such as DDT) and pyrethroid pesticides (such as Permethrin).

The inventor has found that parasite repellent products produced using parasite repellent absorbent material made by the claimed process are particularly effective when the claimed process uses a solution or suspension comprising from 10% w/w to 45% w/w of the at least one parasite repellent, preferably about 18% w/w of the at least one parasite repellent. Optionally, the solution or suspension can further comprise at least one anti-oxidation compound, at least one fragrance or at least one UV screen. Suitable anti-oxidation compounds include those selected from the list consisting of butylated hydroxytoluene (BHT), butylated hydroxyanisole (BHA), tocopheryl acetate, propyl gallate, and any combination thereof. Suitable fragrances include those selected from the list consisting of tea tree oil, lavender oil, other synthetic fragrances suitable for use with species such as cat, and any combination thereof. Suitable UV screens include those selected from the list consisting of octylmethoxy cinnamate, ethylhexyl-p-methoxycinnamate, 2-ethoxyethyl-p-methoxycinnamate, cinoxate, and any combination thereof.

In one embodiment, the desired loading of the at least one parasite repellent ranges from 60 mg of solution or suspension per cm² of absorbent material to 75mg of solution or suspension per cm² of absorbent material, preferably about 69 mg of solution or suspension per cm² of absorbent material.

In another embodiment, if the at least one primary solvent is an aqueous solvent the absorbent material may be dried at a temperature of from 70 °C to 90 °C, preferably from 75 °C to 85 °C. Alternatively, if the at least one primary solvent is a non-aqueous solvent the absorbent material may be dried at a temperature of from 30 °C to 45 °C, preferably from 35 °C to 40 °C. Optionally, the drying step involves two drying stages, the first stage at a higher temperature than the second stage. Additionally, the absorbent material may be dried for a length of time ranging from 10 minutes to 120 minutes, preferably about 30 minutes.

The inventor has found that the drying step is particularly effective when the absorbent material is dried in a sealed tank with a gaseous circulation system. The gaseous circulation system may use a pump to blow and/or suck gases through the sealed tank and the evaporated solvent may, optionally, be recovered and/or recycled.

The storing step is used to cure the dried absorbent material. Whilst the dried absorbent material is stored away from direct sunlight, the at least one parasite repellent migrates into the absorbent material to produce a parasite repellent absorbent material that is less oily, and therefore more suited to further processing steps and for use in a parasite repellent product. Depending on the solution or suspension used, the absorbent material may be observed to undergo a colour change during storage.

Although the dried absorbent material should be stored away from direct sunlight for at least 12 hours, this length of time can be increased to a period of at least 24 hours, at least 48 hours, at least 72 hours or even longer. However, the inventor has found that the optimum storage time is no more than a week. After this time the parasite repellent absorbent material should be processed to make a parasite repellent product, then packaged ready for distribution to customers and use.

The dried absorbent material may be stored at a temperature of 25 °C or less, optionally from 15 °C to 20 °C.

The parasite repellent absorbent material produced by the claimed process may comprise from 5 mg of parasite repellent per cm² of absorbent material to 20 mg of parasite repellent per cm² of absorbent material, preferably about 12 mg of parasite repellent per cm² of absorbent material. Suitable absorbent materials include those selected from the list consisting of natural felt, synthetic felt, non-woven fabrics, super-absorbent polymer and any combination thereof. Optionally the absorbent material is polyester felt. Various thicknesses and densities of absorbent material can be used in the present invention, for example the absorbent material may be from 1 mm to 5 mm thick, preferably 3 mm thick and the absorbent material may have a density of from 300 g/m² to 600 g/m², preferably about 450 g/m².

The absorbent material may be laminated on one side, optionally with a coloured and/or reflective material. The colour and/or reflective qualities of the laminate add to the decorative and/or safety features to any collar made using the parasite repellent absorbent material of the present invention. The laminate material may be plastic, e.g. polyurethane.

The storing step has been found to be helpful in preventing the delamination of laminated absorbent material. The type of absorbent material used, the quantity and type of solvent used, the drying conditions and the storage conditions can all affect delamination of laminated absorbent material.

Once the parasite repellent absorbent material has been made the material can be processed further to make a parasite repellent product, such as a parasite repellent collar or a parasite repellent pet bed liner. Such a collar can incorporate fastening means, such as a buckle, adjustment means, such as elastic, and additional features, such as a bell. Such a pet bed liner could help with control of parasites in a domesticated animal's environment. The liner may be disposable and may incorporate a cover, e.g. a loosely woven fabric, which cover allows the at least one parasite repellent to be released slowly over time. As discussed above, the optimum time period from dosing the absorbent material to packaging the parasite repellent collar or a parasite repellent pet bed liner is no more than a week.

In order that the invention may be more fully understood the following non-limiting Examples are provided by way of illustration only.

### EXAMPLE 1

### Preparation of 18% w/w Margosa extract Solution

The solution was manufactured using the following components:

**Table 1.1 Margosa extract solution components**

| Component | % w/w | Amount required per 1 kg batch |
|---|---|---|
| Margosa extract | 18.00 | 180.00g |
| Butylated hydroxytoluene (BHT) | 0.025 | 0.25g |
| Acetone | 81.975 | 819.75g |

The components were dispensed in the order shown in table 1.1, with brief mixing (approximately 1 - 2 minutes) to dissolve the BHT. The solution formed was clear and amber-coloured, with no suspended particles and a characteristic (garlic-like) odour.

The BHT used was of Ph Eur quality and the acetone was a laboratory reagent grade, >99.5%. The Margosa extract was sourced from Terra Nostra GmbH.

### EXAMPLE 2

### Spraying of Felt with the 18% w/w Margosa extract Solution

The Margosa extract solution of Example 1 was delivered using a calibrated trigger spray pack set to 'spray' to a sample of laminated felt measuring 20 cm x 20 cm (400 cm²) to achieve a desired loading of the Margosa extract of about 69 mg of solution per cm² of the felt.

### EXAMPLE 3

### Drying of the Sprayed Felt

The sprayed felt from Example 2 was placed in a sealed tank with a gaseous circulation system, which tank had been pre-warmed to 35 °C. The following observations were recorded:

**Table 3.1 Drying conditions and observations**

| Time | Temperature | Weight of felt |
|---|---|---|
| 0 min | 35°C | 55.5g |
| 30 min | 35°C | 37.5g |
| 60 min | 35°C | 37.5g |

### EXAMPLE 4

### Storing of the Dried Felt

After 60 minutes of drying the felt was removed to ambient storage (approximately 18 °C).

The upper surface of dried felt was off-white/pale yellow and oily to the touch, but following 48 hours of storage at ambient temperature the felt was whiter in appearance and felt dry.

## Claims

1. A process for making parasite repellent absorbent material, said process comprising:
a). dosing an absorbent material with a solution or suspension, said solution or suspension comprising at least one primary solvent and at least one parasite repellent to achieve a desired loading of the at least one parasite repellent ;
b). drying the dosed absorbent material so that the at least one primary solvent evaporates; and
c). storing the dried absorbent material away from direct sunlight for at least 12 hours to form parasite repellent absorbent material.

2. A process according to claim 2, wherein the dosing is achieved by spraying the absorbent material with the solution or suspension, soaking the absorbent material in the solution or suspension, or immersing the absorbent material in the suspension or solution.

3. A process according to claim 1 or 2, wherein the at least one primary solvent is selected from the list consisting of aqueous solvents, such as water, and non-aqueous solvents selected from the list consisting of acetone, ethanol, isopropanol, ethyl acetate, and any combination thereof.

4. A process according to claim 1, 2 or 3, wherein the solution or suspension sprayed onto the absorbent material comprises at least one secondary solvent in addition to the at least one primary solvent and at least one parasite repellent, and wherein the at least one secondary solvent is less volatile than the at least one primary solvent.

5. A process according to claim 4, wherein the at least one secondary solvent is selected from the list consisting of glycol ethers, such as carbitol, and silicones, such as low viscosity polydimethyl siloxanes.

6. A process according to any preceding claim, wherein the at least one parasite repellent is selected from the list consisting of margosa extract, ethyl butylacetylaminopropionate, diethyl toluamide, tea tree oil, coconut oil triglycerides, geraniol, and any combination thereof.

7. A process according to any preceding claim, wherein the solution or suspension comprises from 10% w/w to 45% w/w of the at least one parasite repellent, preferably about 18% w/w of the at least one parasite repellent.

8. A process according to any preceding claim, wherein the solution or suspension further comprises at least one anti-oxidation compound, at least one fragrance, at least one UV screen or any combination thereof.

9. A process according to any preceding claim, wherein the desired loading of the at least one parasite repellent ranges from 60 mg of solution or suspension per cm² of absorbent material to 75 mg of solution or suspension per cm² of absorbent material, preferably about 69 mg of solution or suspension per cm² of absorbent material.

10. A process according to any preceding claim, wherein the at least one primary solvent is an aqueous solvent and the absorbent material is dried at a temperature of from 70 °C to 90 °C, preferably from 75 °C to 85 °C.

11. A process according to any preceding claim, wherein the at least one primary solvent is a non-aqueous solvent and the absorbent material is dried at a temperature of from 30 °C to 45 °C, preferably from 35 °C to 40 °C.

12. A process according to any preceding claim, wherein the absorbent material is dried for a length of time ranging from 10 minutes to 120 minutes, preferably about 30 minutes.

13. A process according to any preceding claim, wherein the parasite repellent absorbent material comprises from 5 mg of parasite repellent per cm² of absorbent material to 20 mg of parasite repellent per cm² of absorbent material, preferably about 12 mg of parasite repellent per cm² of absorbent material.

14. A process according to any preceding claim, wherein the absorbent material is selected from the list consisting of natural felt, synthetic felt, non-woven fabrics, super-absorbent polymer and any combination thereof.

15. A collar or pet bed liner made using the parasite repellent absorbent material produced by a process according to any preceding claim.
